# EUROPÄISCHE PATENTSCHRIFT

(11) **EP 0 576 394 B1**
(45) Veröffentlichungstag und Bekanntmachung des Hinweises auf die Patenterteilung: **04.09.1996**
(21) Anmeldenummer: 93810404.9
(22) Anmeldetag: 04.06.1993
(51) Int. Cl.: B61D 17/10, B62D 27/04, B60G 25/00

(54) **Schwingungs- und schalldämpfendes elastisches Verbindungselement**
Vibration and sound damping elastic connection element
Elément élastique de liaison amortissant de vibrations et de bruit

(30) Priorität: 24.06.1992 CH 1987/92
(43) Veröffentlichungstag der Anmeldung: 29.12.1993
(73) Patentinhaber: ALUSUISSE-LONZA SERVICES AG, CH-8034 Zürich (CH)
(72) Erfinder: Ritzl, Antal, CH-8047 Zürich (CH); Wernli, Markus, CH-8400 Winterthur (CH)

(56) Entgegenhaltungen:
- EP-A- 0 016 469
- DE-A- 2 908 823
- DE-U- 8 814 439

## Beschreibung

Die Erfindung betrifft ein schwingungs- und schalldämpfendes elastisches Verbindungselement nach dem Oberbegriff von Anspruch 1.

Zur Erhöhung des Komforts für die Fahrgäste in Schienenfahrzeugen muß der Fahrgastraum thermisch und akustisch isoliert werden. Von besonderer Bedeutung ist hierbei die Isolation des Bodenaufbaus gegen die Tragkonstruktion des Wagenbodens, da die stärkste Lärmentwicklung von den unterhalb der Tragkonstruktion angeordneten Drehgestellen ausgeht. Zudem soll die begehbare Fläche des Bodenaufbaus eine elastische Laufebene bilden.

Zur schwimmenden Lagerung des Bodenaufbaus auf dem tragenden Wagenboden von Schienenfahrzeugen für den Personentransport ist bekannt, Gummielemente zwischen Wagenboden und Bodenaufbau anzuordnen. Einstückige Gummiblöcke haben jedoch den Nachteil, dass die mit zunehmender Belastung infolge Kompression eintretende Verhärtung die Schall- und Vibrationsdämpfung vermindert.

Aus EP-A-0016469 ist ein Gummimetallelement mit den Merkmalen des Oberbegriffs von Anspruch 1 bekannt, das sich aus einer äusseren konischen Metallschale, einem inneren konischen Sockel sowie einem dazwischen an beiden Teilen anvulkanisierten Gummielement zusammensetzt. Das Gummimetallelement ist dabei über einen Sockel an einer Konsole befestigt. Am Wagenboden sind zwei glockenartige Lagerdeckel befestigt, die auf den äusseren Metallschalen der Gummimetallemelente aufliegen.

Des weiteren ist es aus DE-U-8814439 bekannt, einen Fussboden für Schienenfahrzeuge zur Verminderung von Dröhngeräuschen mit einem Belag aus Entdröhnmaterial zu versehen.

In Kenntnis dieses Standes der Technik hat sich der Erfinder die Aufgabe gestellt, ein Verbindungselement der eingangs erwähnten Art zu schaffen, welches auch unter erhöhter Belastung ein gutes vibrations- und schalldämpfendes Verhalten zeigt.

Zur erfindungsgemässen Lösung der Aufgabe führen die Merkmale von Anspruch 1.

Die Anschlagflächen können gegenüber der Senkrechten bis zu etwa 20 ° geneigt sein.

Bei einer bevorzugten Ausführungsform weist das Verbindungselement ein querschnittlich U-förmiges Grundprofil sowie ein dieses teilweise übergreifendes querschnittlich U-förmiges Deckprofil mit Bodenstreifen und von diesen rechtwinklig abragende Schenkelstreifen auf. Zwischen den paarweise einander gegenüberstehenden Schenkelstreifen angeordnete und an diesen haftende elastische Profilleisten begrenzen mit den die Auflageflächen für Wagenboden und Bodenaufbau bildenden Bodenstreifen einen Hohlraum. Zwischen den elastischen Profilleisten im Innern des Hohlraums liegt eine die Profilleisten verbindende Schicht oder dünne Platte aus schalldämpfendem Werkstoff zumindest einem der Bodenstreifen haftend an.

Grundprofil und Deckprofil können grundsätzlich auf zwei verschiedene Arten zueinander angeordnet sein, wobei bei einer ersten Anordnung die freien Enden der Schenkelstreifen des Grundprofils vom Bodenstreifen des Deckprofils wegweisen und bei einer zweiten Anordnung die freien Enden der Schenkelstreifen des Grundprofils dem Bodenstreifen des Deckprofils gegenüber stehen. Zur Abstützung der elastischen Profilleisten können an den Schenkelstreifen des Grundprofils parallel zum Bodenstreifen nach aussen abragende Längsstege angeformt sein. Diese Längsstege sind entsprechend der Anordnung des Grundprofils zum Deckprofil entweder an den freien Enden der Schenkelstreifen oder etwa in der Verlängerung des Bodenstreifens des Grundprofils angeordnet.

Bei einer bevorzugten Einbaumöglichkeit des Verbindungselements mit gleichsinniger Anordnung von Grund- und Deckprofil liegt der Bodenstreifen des Grundprofils in Einbaulage des Verbindungselements paarweise vom Wagenboden aufragenden Profilstegen T-förmigen Querschnitts auf, wobei der Bodenstreifen eine in dessen Längsmitte verlaufende, zwischen die Profilstege einragende rinnenförmige Vertiefung aufweist. Zur kraftschlüssigen Festlegung des Grundprofils am Wagenboden ist ein Klemmbügel geeignet, welcher den Bodenstreifen an der Stelle der rinnenförmigen Vertiefung übergreift und an den Profilstegen gegengelagert ist. Bei gegensinniger Anordnung von Grund- und Deckprofil kann der Bodenstreifen des Grundprofils in Einbaulage des Verbindungselements direkt dem Wagenboden aufliegen.

Grundprofil und Deckprofil sind zweckmässigerweise aus Aluminium stranggepresst. Die elastischen Profilleisten und die sie verbindende Schicht oder dünne Platte können aus Naturkautschuk oder ähnlichen Werkstoffen gefertigt sein. Zweckmässigerweise sind die elastischen Teile auf den Schenkelstreifen bzw. Bodenstreifen aufvulkanisiert.

Das erfindungsgemässe Verbindungselement zeigt ein vorzügliches Verhalten in Bezug auf Wärme- und Schallisolation sowie Schwingungsdämpfung.

Die Wärmeisolation ist durch die elastischen Profilleisten gegeben, welche das Grundprofil vom Deckprofil trennen. Auch bei vollständiger Einfederung ist die Wärmeisolation durch die zwischengeordnete Schicht oder dünne Platte aus schalldämpfendem Werkstoff gewährleistet.

Die Schalldämpfung erfolgt beim erfindungsgemässen Verbindungselement über mehrere Stufen. Zunächst wird der Schall vom Wagenboden auf das Grundprofil übertragen und kann beispielsweise durch ein zwischengeordnetes doppelseitiges Klebeband zusätzlich leicht geschwächt werden. Der über die Profilleisten umgelenkte und in das Deckprofil eingeleitete Körperschall wird durch die Profilleisten selbst sowie gegebenenfalls von einem zusätzlich zwischen Deckprofil und Bodenaufbau angeordneten doppelseitigen Klebeband weiter reduziert. Eine letzte Schalldämpfung erfolgt sodann im Bodenaufbau. Der vom Grundprofil ausgehende Luftschall wird durch die Schicht oder dünne Platte aus schalldämpfendem Material vor der Einleitung in das Deckprofil ebenfalls abgeschwächt. Insgesamt ergibt sich somit eine äusserst wirksame Schallisolation.

Mit der erfindungsgemässen Anordnung der elastischen Masse und der schalldämpfenden Schicht wird sowohl eine gute Vibrations- und Schalldämpfung als auch ein angenehm weicher Laufkomfort für die Fahrgäste erreicht. Diese Vorzüge gegenüber vollmassiven Gummidämpfelementen ergeben sich durch die bei der erfindungsgemässen Anordnung der elastischen Masse bei Einfederung auftretenden Schubkräfte anstelle einer reinen Kompression -- wodurch im Belastungsfall eine nur geringe Verhärtung der elastischen Masse eintritt -- und durch die schalldämpfende Wirkung der auf die freien Flächen von Grund- und/oder Deckprofil aufgetragenen Schicht aus schalldämpfendem Werkstoff.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf einen geschnittenen Wagenkastenaufbau;
- Fig. 2:: eine Schrägsicht auf ein Verbindungselement;
- Fig. 3:: einen Querschnitt durch das Verbindungselement von Fig. 2;
- Fig. 4:: einen Querschnitt durch eine andere Ausführungsform eines Verbindungselements;
- Fig. 5:: das Verbindungselement von Fig. 3 mit eingesetztem Klemmbügel;
- Fig. 6:: einen vergrösserten Längsschnitt durch den Klemmbügel von Fig. 5;
- Fig. 7:: einen Querschnitt durch ein Verbindungselement mit Hohlprofilen;
- Fig. 8:: einen Querschnitt durch ein Verbindungselement mit T-förmigem Grundprofil;
- Fig. 9:: einen Querschnitt durch ein tellerförmiges Verbindungselement;
- Fig.10:: die Draufsicht auf das Verbindungselement von Fig. 9.

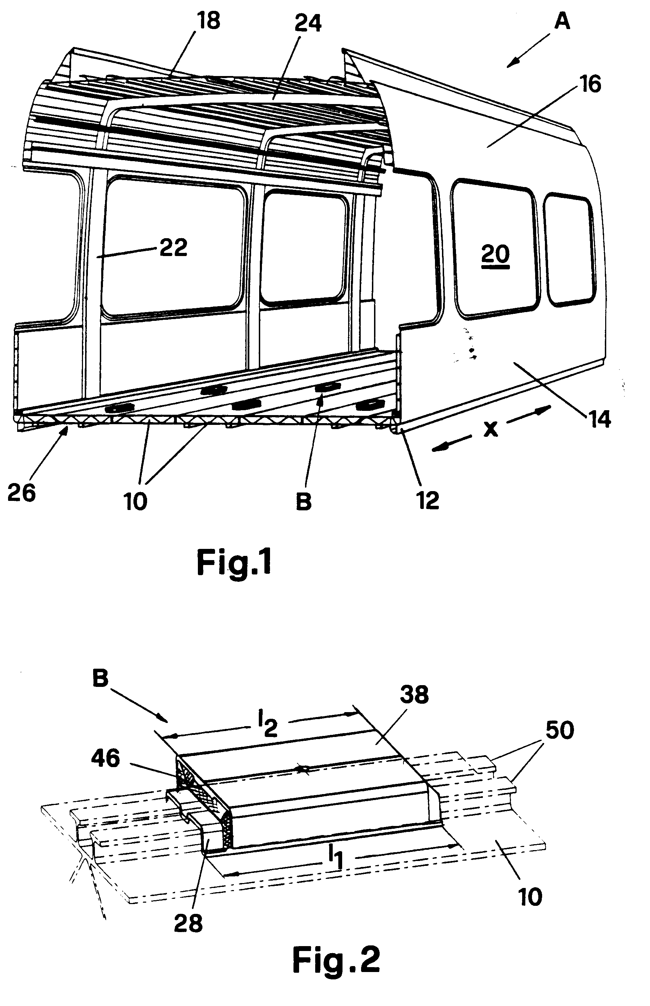

Ein für den Personentransport im Schienenverkehr konzipierter Wagenkastenaufbau A ist gemäss Fig. 1 aus in Wagenlängsrichtung x verlaufenden und miteinander verschweissten stranggepressten Grossprofilen aus Aluminium zusammengesetzt; die wichtigsten Strukturträger sind hierbei die Wagenbodenprofile 10, die Untergurtprofile 12, die Seitenwandprofile 14, die Dachgurtprofile 16 und die Dachprofile 18. Weitere Strukturträger bilden die quer zur Wagenlängsrichtung x eingesetzten und Fensteröffnungen 20 begrenzenden Pfostenprofile 22 sowie die Dachverstrebungen 24.

Die als Mehrkammerhohlprofile ausgestalteten, längsseitig aneinandergereihten und miteinander verschweissten Wagenbodenprofile 10 bilden den tragenden Wagenboden 26, auf dessen Oberseite Verbindungselemente B als Auflagekörper für einen -- aus Gründen der besseren Übersicht in Fig. 1 nicht dargestellten -- begehbaren schwimmenden Bodenaufbau 27 angeordnet sind. Die Anzahl und örtliche Verteilung der einzelnen Verbindungselemente B über den gesamten Wagenboden 26 richtet sich nach der Belastung des Bodenaufbaus 27.

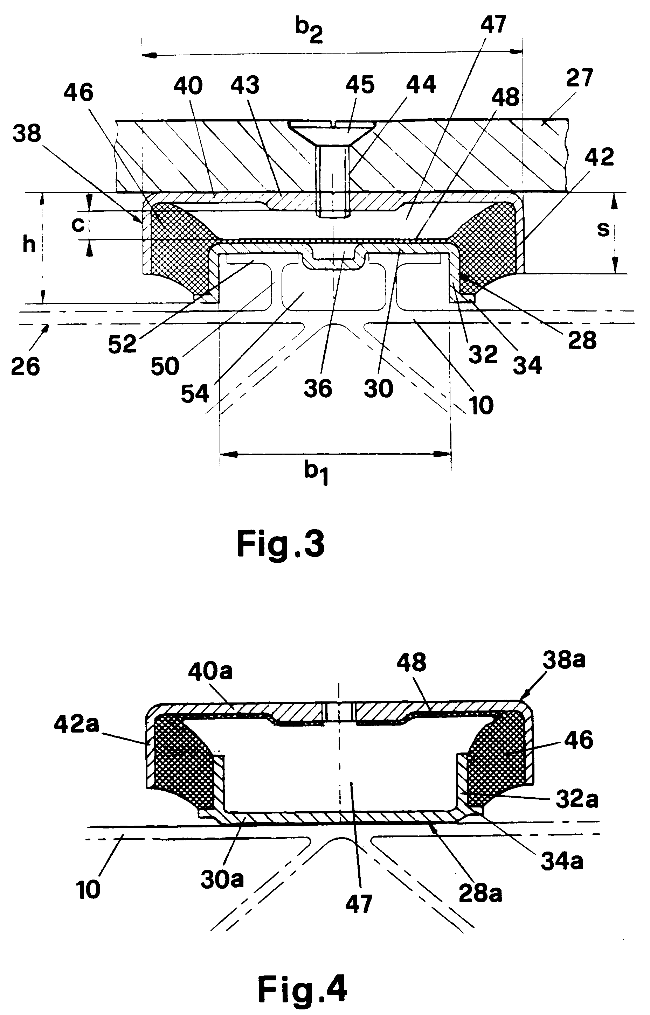

Das in den Fig. 2 und 3 dargestellte Verbindungselement B weist ein querschnittlich U-förmiges Grundprofil 28 einer Länge l₁ von beispielsweise 120 mm und einer Breite b₁ von beispielsweise 60 mm auf. Das Grundprofil 28 besteht aus einem Bodenstreifen 30 mit von diesem rechtwinklig abragenden Schenkelstreifen 32, deren freie Enden als schmale Längsstege 34 parallel zum Bodenstreifen 30 nach aussen abragen. Im Bodenstreifen 30 verläuft in der Längsmitte eine rinnenartige Vertiefung 36. Das Grundprofil 28 wird von einem ebenfalls querschnittlich U-förmigen Deckprofil 38 teilweise übergriffen, wobei das Deckprofil 38 analog zum Grundprofil 28 einen Bodenstreifen 40 mit von diesem rechtwinklig abragenden, in Einbaulage gegen den Wagenboden 26 gerichteten Schenkelstreifen 42 aufweist und die Bodenstreifen 30,40 sowie die Schenkelstreifen 32,42 von Grundprofil 28 und Deckprofil 38 parallel und in Abstand zueinander stehen. Das Deckprofil 38 weist eine Länge l₂ von beispielsweise 100 mm und einen Breite b₂ von beispielsweise 90 mm auf. Die Länge s der Schenkelstreifen 42 des Deckprofils 38 beträgt beispielsweise 20 mm bei einer Bauhöhe h des Verbindungselements B von beispielsweise 27 mm. Der Bodenstreifen 40 ist im Mittenbereich 43 verdickt ausgebildet und mit einer Gewindebohrung 44 für eine Schraube 45 zur Herstellung einer Schraubverbindung mit dem begehbaren Bodenaufbau 27 versehen. Die Gewindebohrung 44 mit eingesetzter Schraube 45 liegt hierbei der Vertiefung 36 im Bodenstreifen 30 des Grundprofils 28 gegenüber.

Grundprofil 28 und Deckprofil 38 sind üblicherweise stranggepresste Aluminiumprofile, jedoch können grundsätzlich auch andere Metall- oder auch Kunststoffprofile eingesetzt werden.

Zwischen den paarweise einander gegenüberstehenden Schenkelstreifen 32,42 von Grundprofil 28 und Deckprofil 38 ist je eine elastische Profilleiste 46 -- hier ein Naturkautschuk mit einer Shore-Härte von 70 SH -- angeordnet. Die auf die Schenkelstreifen 32,42 aufvulkanisierten elastischen Profilleisten 46 sind zusätzlich im Übergangsbereich zwischen Bodenstreifen 40 und Schenkelstreifen 42 des Deckprofils 38 sowie an den Längsstegen 34 der Schenkelstreifen 32 des Grundprofils 28 abgestützt und begrenzen zusammen mit den Bodenstreifen 30,40 einen Hohlraum 47.

Die paarweise vorhandenen elastischen Profilstreifen 46 sind über eine auf den Bodenstreifen 30 des Grundprofils aufvulkanisierte Schicht oder dünne Platte 48 aus derselben oder einer anderen Masse aus schalldämpfendem Werkstoff wie beispielsweise Naturkautschuk, Kunststoff, Schaumstoff u.a. miteinander verbunden.

Im Belastungsfall schiebt sich das Deckprofil 38 über das Grundprofil 28, wobei die maximale Einfederung c durch den Abstand zwischen den Bodenstreifen 30,40 vorgegeben ist und beispielsweise 7mm beträgt.

Das in den Fig. 2 und 3 gezeigte Verbindungselement B ist durch die Ausgestaltung seines Grundprofils 28 an ein standardisiertes Wagenbodenprofil 10 mit paarweise aufragenden Profilstegen 50 T-förmigen Querschnitts angepasst, wobei die T-Balkenstreifen 52 die Auflagefläche für den Bodenstreifen 30 des Grundprofils 28 bilden. Zwischen den paarweisen Profilstegen 50 ergibt sich eine hinterschnittene Längsnut 54, in welche die Vertiefung 36 des Bodenstreifens 30 einragt.

Bei einer in Fig. 4 dargestellten weiteren Ausführungsvariante des Verbindungselements B ist die offene Seite des Grundprofils 28a der offenen Seite des Deckprofils 38a zugewandt, d.h. das Deckprofil 38a übergreift mit seinen Schenkelstreifen 42a die freien Enden der Schenkelstreifen 32a des Grundprofils 28a, welches mit seinem Bodenstreifen 30a direkt dem Wagenbodenprofil 10 aufliegt. Die schmalen Längsstege 34a ragen hier von den Schenkelstreifen 32a etwa in der Verlängerung des Bodenstreifens 30a ab. Die die elastischen Profilleisten 46 verbindende Schicht oder dünne Platte 48 liegt bei dieser Ausführungsform des Verbindungselements B der Innenseite des Bodenstreifens 40a an.

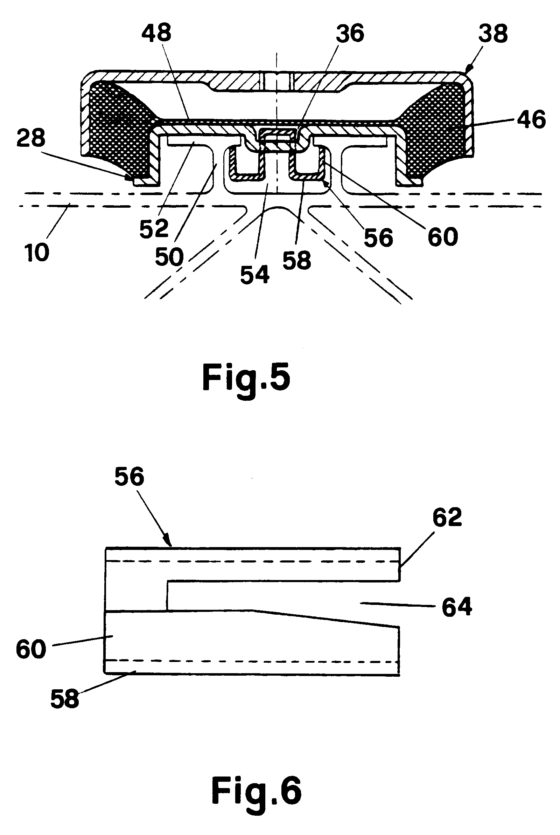

Ein einfaches Klammerelement zur kraftschlüssigen Fixierung des in den Fig. 2 und 3 gezeigten Verbindungselements B am Wagenbodenprofil 10 ist in den Fig. 5 und 6 dargestellt und besteht aus einem Klemmbügel 56 aus beispielsweise Aluminium oder Kunststoff mit im wesentlichen U-förmigem Querschnitt und zweifach rechtwinklig nach aussen abgewinkelten Schenkelstreifen 58 mit Endstreifen 60. Der Klemmbügel 56 ist von einer Stirnseite 62 her mit einem keilförmigen Einschnitt 64 versehen. Zur Befestigung des Verbindungselements B am Wagenbodenprofil 10 wird dieses auf die Profilstege 50 aufgesetzt und ein- oder beidseitig ein Klemmbügel 56 derart eingeschoben, dass der Bodenstreifen 30 des Grundprofils 28 an der Stelle der Vertiefung 36 vom Einschnitt 64 übergriffen wird und die Endstreifen 60 innerhalb der Längsnut 54 stirnseitig den T-Balkenstreifen 52 als Gegenlager klemmend anliegen.

Die Art der kraftschlüssigen Verbindung des Bodenaufbaus 27 mit dem Bodenstreifen 40 des Deckprofils 38 und des Bodenstreifens 30 mit den T-Balkenstreifen 52 bzw. dem Wagenbodenprofil 10 richtet sich nach den an die Festigkeit der Verbindungen gestellten Anforderungen sowie den zu verbindenden Werkstoffen. Das gegenüber dem Deckprofil 38 längere Grundprofil 28 ermöglicht verschiedene Befestigungsarten. In Betracht kommende Verbindungsmittel sind Klebstoffe, doppelseitiges Klebeband, Klettverschlüsse, Schweiss-, Niet-, Klemm- und Schraubverbindungen oder entsprechende Kombinationen. Bevorzugt sind Klettverschlüsse, z.B. in Form von Klettband aus einer Haken- und einer Ösenseite. Eine Seite kann auf dem Bodenaufbau 27, resp. T-Balkenstreifen 52, bzw. dem Wagenbodenprofil 10, beispielsweise durch Kleben, befestigt werden und an gegengleicher Lage am Bodenstreifen 40, 40a des Deckprofils 38, 38a, resp. am Bodenstreifen 30, 30a kann die andere Seite, z.B. durch Kleben, befestigt werden. Solche Klettverbindungen sind leicht lösbar.

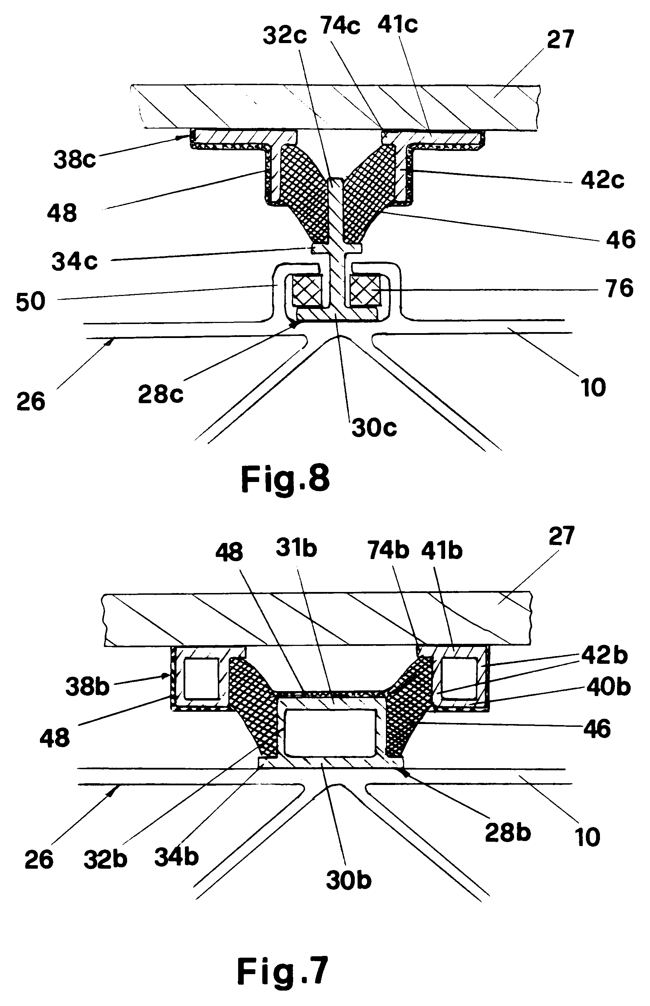

Fig. 7 zeigte ein Verbindungselement, dessen Grundprofil 28b als querschnittlich rechteckförmiges Hohlprofil mit Bodenstreifen 30b, Deckstreifen 31b und Seitenstreifen 32b ausgebildet ist. Die schmalen Längsstege 34b ragen hier von den Seitenstreifen 32b in der Verlängerung des Bodenstreifens 30b ab. Das Deckprofil 38b wird durch zwei parallel zueinander angeordnete, querschnittlich rechteckförmige Hohlprofile mit Bodenstreifen 40b, Deckstreifen 41b und Seitenstreifen 42b gebildet. Von den Seitenstreifen 42b ragen schmale Längsstege 74b in der Verlängerung des Deckstreifens 41b ab. Die elastischen Profilleisten 46 sind zwischen den parallel einander gegenuberstehenden Seitenstreifen 32b, 42b angeordnet. Die Schicht 48 aus schalldämpfendem Werkstoff liegt einerseits dem Deckstreifen 31b sowie andererseits den Bodenstreifen 40b und den freien Seitenstreifen 42b an.

Fig. 8 zeigt ein Verbindungselement mit einem Grundprofil 28c T-förmigen Querschnitts. Hier bildet der Schenkelstreifen 32c beidseits je eine Anlagefläche für die elastischen Profilleisten 46. Der Bodenstreifen 30c des Grundprofils 28c liegt zwischen den Profilstegen 50 dem Wagenboden 26 auf und wird mittels Keilelementen 76 kraftschlüssig fixiert. Die schmalen Längsstege 34c sind beidseits des Schenkelstreifens 32c angeformt. Das Deckprofil 38c wird durch zwei spiegelbildlich zu einander angeordnete Profile L-formigen Querschnitts gebildet, deren Vertikalstreifen 42c parallel zum Schenkelstreifen 32c liegen und deren Horizontalstreifen 41c nach aussen abragen. In der Verlängerung der Horizontalstreifen 41c ragt nach innen ein schmaler Längssteg 74c ab.

Zwischen den Vertikalstreifen 42c und dem Schenkelstreifen 32c sind die elastischen Profilleisten 46 angeordnet. Die Schicht 48 aus schalldämpfendem Werkstoff liegt den freien Flächen des Deckprofils 38c haftend an.

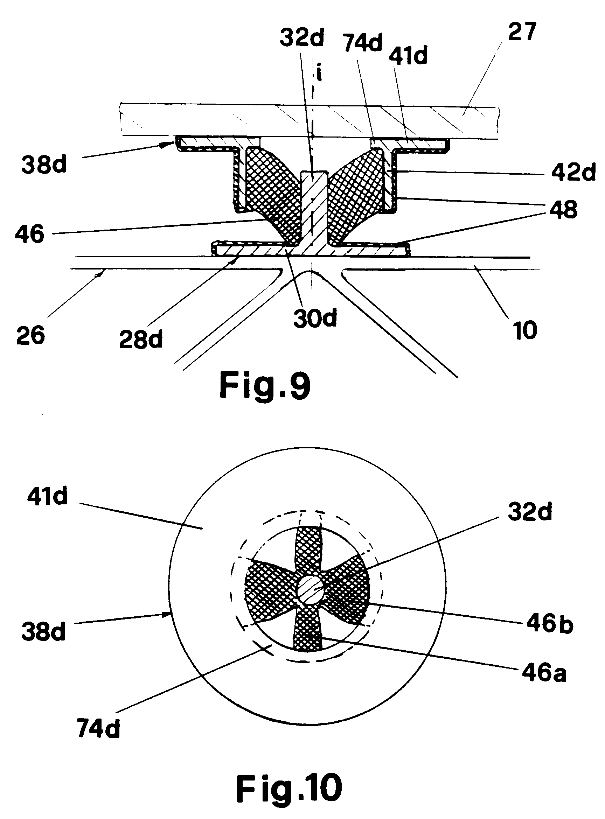

In Fig. 9 und 10 ist eine tellerartige Ausführung eines Verbindungselements dargestellt. Das Grundprofil 28d wird durch eine scheibenförmige Bodenplatte 30d mit einem zentral angeformten, vertikal aufragenden Stab 32d gebildet. Das konzentrisch zum Grundprofil 28d angeordnete Deckprofil 38d weist einen L-förmigen Querschnitt mit parallel zur Stabachse i stehendem Schenkelstreifen 42d und parallel zur Bodenplatte 30d liegendem, rechtwinklig zum Schenkelstreifen 42d nach aussen angeformten kreisringförmigen Deckstreifen 41d auf. Ein schmaler, kreisringförmiger Steg 74d ist am Schenkelstreifen 42d angeformt und ragt in der Verlängerung des Deckstreifens 41d nach innen ab. Zwischen der Fläche des Stabes 32d und dem ringförmigen Schenkelstreifen 42d sind je ein Paar elastische Körper 46a,b unterschiedlicher Dimensionen rechtwinklig zueinander angeordnet. Die Schicht 48 aus schalldämpfendem Werkstoff liegt den freien Flächen des Deckprofils 38d und der Bodenplatte 30d an. Durch ihre unterschiedlichen Dickendimensionen weisen die elastischen Körper 46 a, b in zwei Richtungen -- beispielsweise in Längs- und Querrichtung des Wagenbodens 26 -- unterschiedlichen Steifigkeiten auf.

## Patentansprüche

1. Schwingungs- und schalldämpfendes elastisches Verbindungselement für die schwimmende Lagerung eines Bodenaufbaus auf einem tragenden Wagenboden von Schienen- oder Strassenfahrzeugen für den Personentransport, mit einem elastischen Körper mit Auflageflächen für Wagenboden und Bodenaufbau, wobei das Verbindungselement (B) ein Grundprofil (28, 28a, 28b, 28c, 28d) sowie ein gegenüber dem Grundprofil höhenversetztes Deckprofil (38, 38a, 38b, 38c, 38d) aufweist und zwischen paarweise einander gegenüberstehenden Anschlagflächen des Grundprofils und des Deckprofils eine an diesen haftende elastische Masse (46, 46a, 46b) angeordnet ist,
dadurch gekennzeichnet,
dass das Grundprofil (28, 28a, 28b, 28c, 28d) eine Auflagefläche (30, 30a, 30b, 30c, 30d) für den Wagenboden (26) und das Deckprofil (38, 38a, 38b, 38c, 38d) eine Auflagefläche (40, 40a, 41b, 41c, 41d) für den Bodenaufbau (27) aufweist, die Anschlagflächen (32, 42; 32a, 42a; 32b, 42b; 32c, 42c; 32d, 42d) im wesentlichen senkrecht zum Wagenboden und Bodenaufbau liegen und den freien Flächen von Grund- und/oder Deckprofil eine Schicht oder dünne Platte (48) aus schalldämpfendem Werkstoff haftend anliegt.

2. Verbindungselement nach Anspruch 1, dadurch gekennzeichnet, dass die Anschlagflächen (32, 42; 32a, 42a; 32b, 42b; 32c, 42c; 32d, 42d) gegenüber der Senkrechten höchstens 20 ° geneigt sind.

3. Verbindungselement nach Anspruch 1 oder 2, dadurch gekennzeichnet, dass das Verbindungselement (B) ein querschnittlich U-förmiges Grundprofil (28, 28a) sowie ein dieses teilweise übergreifendes querschnittlich U-förmiges Deckprofil (38, 38a) mit Bodenstreifen (30, 30a; 40, 40a) und von diesen rechtwinklig abragende Schenkelstreifen (32, 32a; 42, 42a) aufweist und zwischen den paarweise einander gegenüberstehenden Schenkelstreifen (32, 42; 32a, 42a) angeordnete und an diesen haftende elastische Profilleisten (46) mit den die Auflageflächen für Nagenboden (26) und ßodenaufbau (27) bildenden Bodenstreifen (30, 30a; 40, 40a) einen Hohlraum (47) begrenzen, wobei zwischen den elastischen Profilleisten (46) im Innern des Hohlraums (47) eine die Profilleisten (46) verbindende Schicht oder dünne Platte (48) aus schalldämpfendem Werkstoff zumindest einem der Bodenstreifen (30, 30a; 40, 40a) haftend anliegt.

4. Verbindungselement nach Anspruch 3, dadurch gekennzeichnet, dass die freien Enden der Schenkelstreifen (32) des Grundprofils (28) vom Bodenstreifen (40) des Deckprofils (38) wegweisen.

5. Verbindungselement nach Anspruch 4, dadurch gekennzeichnet, dass an den freien Enden der Schenkelstreifen (32) des Grundprofils (28) parallel zum Bodenstreifen (30) nach aussen abragenden Längsstege (34) angeformt sind.

6. Verbindungselement nach Anspruch 3, dadurch gekennzeichnet, dass die freien Enden der Schenkelstreifen (32a) des Grundprofils (28a) dem Bodenstreifen (40a) des Deckprofils (38a) gegenüberstehen.

7. Verbindungselement nach Anspruch 6, dadurch gekennzeichnet, dass an den Schenkelstreifen (32a) des Grundprofils (28a) etwa in der Verlängerung des Bodenstreifens (30a) Längsstege (34a) abragen.

8. Verbindungselement nach Anspruch 4 oder 5, dadurch gekennzeichnet, dass der Bodenstreifen (30) des Grundprofils (28) in Einbaulage des Verbindungselements (B) paarweise vom Wagenboden (26) aufragenden Profilstegen (50) T-förmigen Querschnitts aufliegt.

9. Verbindungselement nach Anspruch 8, dadurch gekennzeichnet, dass der Bodenstreifen (30) des Grundprofils (28) eine in dessen Längsmitte verlaufende, zwischen die Profilstege (50) einragende rinnenförmige Vertiefung (36) aufweist.

10. Verbindungselement nach Anspruch 8, dadurch gekennzeichnet, dass zur kraftschlüssigen Festlegung des Grundprofils (28) am Wagenboden (26) der Bodenstreifen (30) an der Stelle der rinnenförmigen Vertiefung (36) von einem an den Profilstegen (50) gegengelagerten Klemmbügel (56) übergriffen ist.

11. Verbindungselement nach Anspruch 6 oder 7, dadurch gekennzeichnet, dass der Bodenstreifen (30a) des Grundprofils (28a) in Einbaulage des Verbindungselements (B) direkt dem Wagenboden (26) aufliegt.

12. Verbindungselement nach einem der Ansprüche 1 bis 11, dadurch gekennzeichnet, dass Grundprofil (28, 28a, 28b, 28c) und Deckprofil (38, 38a, 38b, 38c) aus Aluminium stranggepresst sind.

13. Verbindungselement nach einem der Ansprüche 1 bis 12, dadurch gekennzeichnet, dass die elastischen Massen oder Profilleisten (46, 46a, 46b) und die schalldämpfende Schicht oder dünne Platte (48) aus Naturkautschuk oder ähnlichen Werkstoffen gefertigt sind.

14. Verbindungselement nach einem der Ansprüche 1 bis 13, dadurch gekennzeichnet, dass die elastischen Massen oder Profilleisten (46, 46a, 46b) und die schalldämpfende Schicht oder dünne Platte (48) auf den entsprechenden Profilteilen aufvulkanisiert sind.

15. Verbindungselement nach Anspruch 13 oder 14, dadurch gekennzeichnet, dass die elastischen Massen (46a, 46b) unterschiedliche Steifigkeiten aufweisen.

## Claims

1. Vibration- and sound-damping elastic connection element for the floating suspension of a floor deck on a load-bearing carriage floor of rail or road vehicles for passenger transport, comprising an elastic body with bearing surfaces for the carriage floor and the floor deck, the connection element (B) having a base profile section (28, 28a, 28b, 28c, 28d) and a cover profile section (38, 38a, 38b, 38c, 38d) vertically offset relative to the base profile section and an elastic mass (46, 46a, 46b) being arranged between pairs of opposing stop surfaces of the base profile section and the cover profile section and adhering thereto, characterised in that the base profile section (28, 28a, 28b, 28c, 28d) has a bearing surface (30, 30a, 30b, 30c, 30d) for the carriage floor (26) and the cover profile section (38, 38a, 38b, 38c, 38d) has a bearing surface (40, 40a, 41b, 41c, 41d) for the floor deck (27), the stop surfaces (32, 42; 32a, 42a; 32b, 42b; 32c, 42c; 32d, 42d) are situated substantially perpendicularly to the carriage floor and the floor deck and a layer or thin sheet (48) of sound-damping material bears adhesively against the free surfaces of the base profile section and/or cover profile section.

2. Connection element according to claim 1, characterised in that the stop surfaces (32, 42; 32a, 42a; 32b, 42b; 32c, 42c; 32d, 42d) are inclined by a maximum of 20° relative to the vertical.

3. Connection element according to claim 1 or claim 2, characterised in that the connection element (B) has a base profile section (28, 28a) with a U-shaped cross section and a cover profile section (38, 38a) with a U-shaped cross section partially embracing the latter with base strips (30, 30a; 40, 40a) and flanges (32, 32a; 42, 42a) projecting at right angles therefrom and elastic profiled strips (46) arranged between the pairs of opposing flanges (32, 42; 32a, 42a) and adhering thereto delimit a cavity (47) together with the base strips (30, 30a; 40, 40a) forming the bearing surfaces for the carriage floor (26) and the floor deck (27), a layer or thin sheet (48) of sound-damping material joining the profiled strips (46) bearing adhesively against at least one of the base strips (30, 30a; 40, 40a) between the elastic profiled strips (46) in the interior of the cavity (47).

4. Connection element according to claim 3, characterised in that the free ends of the flanges (32) of the base profile section (28) point away from the base strip (40) of the cover profile section (38).

5. Connection element according to claim 4, characterised in that outwardly projecting longitudinal webs (34) are moulded on to the free ends of the flanges (32) of the base profile section (28) parallel to the base strip (30).

6. Connection element according to claim 3, characterised in that the free ends of the flanges (32a) of the base profile section (28a) are opposite the base strip (40a) of the cover profile section (38a).

7. Connection element according to claim 6, characterised in that longitudinal webs (34a) project from the flanges (32a) of the base profile section (28a) substantially as extensions of the base strip (30a).

8. Connection element according to claim 4 or claim 5, characterised in that the base strip (30) of the base profile section (28) rests on profiled webs (50) with a T-shaped cross section projecting in pairs from the carriage floor (26) in the assembled position of the connection element (B).

9. Connection element according to claim 8, characterised in that the base strip (30) of the base profile section (28) has a channel-shaped recess (36) extending along its longitudinal centre and projecting between the profiled webs (50).

10. Connection element according to claim 8, characterised in that, in order to fix the base profile section (28) to the carriage floor (26) in a non-positive manner, the base strip (30) is embraced by a clamp strap (56) supported against the profiled webs (50) at the channel-shaped recess (36).

11. Connection element according to claim 6 or claim 7, characterised in that the base strip (30a) of the base profile section (28a) rests directly on the carriage floor (26) in the assembled position of the connection element (B).

12. Connection element according to one of claims 1 to 11, characterised in that the base profile section (28, 28a, 28b, 28c) and the cover profile section (38, 38a, 38b, 38c) are extruded from aluminium.

13. Connection element according to one of claims 1 to 12, characterised in that the elastic masses or profiled strips (46, 46a, 46b) and the sound-damping layer or thin sheet (48) are made of natural rubber or similar materials.

14. Connection element according to one of claims 1 to 13, characterised in that the elastic masses or profiled strips (46, 46a, 46b) and the sound-damping layer or thin sheet (48) are vulcanised on to the corresponding profiled parts.

15. Connection element according to claim 13 or claim 14, characterised in that the elastic masses (46a, 46b) display different degrees of rigidity.

## Revendications

1. Elément de liaison élastique amortissant les vibrations et les bruits pour le montage en suspension d'une structure de plancher sur un plancher de wagon porteur de véhicules ferroviaires ou routiers destinés au transport de personnes, comportant un corps élastique avec des surfaces d'appui pour le plancher de wagon et pour la structure de plancher, l'élément de liaison (B) présentant un profilé de base (28, 28a, 28b, 28c, 28d) ainsi qu'un profilé de couverture (38, 38a, 38b, 38c, 38d) décalé en hauteur par rapport au profilé de base ; et entre des surfaces d'appui situées par paires en vis-à-vis les unes des autres du profilé de base et du profilé de couverture est agencée une masse élastique (46, 46a, 46b) adhérant sur celles-ci,
caractérisé en ce que :
le profilé de base (28, 28a, 28b, 28c, 28d) présente une surface d'appui (30, 30a, 30b, 30c, 30d) pour le plancher de wagon (26) et le profilé de couverture (38, 38a, 38b, 38c, 38d) une surface d'appui (40, 40a, 41b, 41c, 41d) pour la structure de plancher (27), en ce que les surfaces de butée (32, 42 ; 32a, 42a ; 32b, 42b ; 32c, 42c ; 32d, 42d) sont situées sensiblement perpendiculairement au plancher de wagon et à la structure de plancher, et en ce que contre les surfaces libres du profilé de base et/ou de couverture s'appuie avec adhésion une couche ou une plaque mince (48) en un matériau amortissant les bruits.

2. Elément de liaison selon la revendication 1, caractérisé en ce que les surfaces de butée (32, 42 ; 32a, 42a ; 32b, 42b ; 32c, 42c ; 32d, 42d) sont inclinées au maximum de 20° par rapport à la verticale.

3. Elément de liaison selon l'une ou l'autre des revendications 1 et 2, caractérisé en ce que l'élément de liaison (B) présente un profilé de base (28, 28a) en section transversale en forme de U, ainsi qu'un profilé de couverture (38, 38a) en section transversale en forme de U et recouvrant partiellement celui-ci, comportant des bandes de plancher (30, 30a ; 40, 40a) et des bandes de côté (32, 32a, 42, 42a) dépassant à un angle droit de celles-ci, et en ce qu'il est prévu entre les bandes de côté (32, 42 ; 32a, 42a) situées par paires en vis-à-vis les unes des autres et des barrettes profilées élastiques (46) adhérant contre celles-ci, qui délimitent avec les bandes de plancher (30, 30a ; 40, 40a) formant les surfaces d'appui pour le plancher de wagon (26) et la structure de plancher (27) une chambre creuse (47), et entre les barrettes profilées élastiques (46) s'appuie, à l'intérieur de la chambre creuse (47), une couche ou plaque mince (48) constituée en un matériau amortissant les bruits et reliant les barrettes profilées (46) en adhésion contre l'une au moins des bandes de plancher (30, 30a ; 40, 40a).

4. Elément de liaison selon la revendication 3, caractérisé en ce que les extrémités libres des bandes de côté (32) du profilé de base (28) sont dirigées en éloignement de la bande de plancher (40) du profilé de couverture (38).

5. Elément de liaison selon la revendication 4, caractérisé en ce qu'aux extrémités libres des bandes de côté (32) du profilé de base (28) sont formées des barrettes longitudinales (34) dépassant vers l'extérieur parallèlement à la bande de plancher (30).

6. Elément de liaison selon la revendication 3, caractérisé en ce que les extrémités libres des bandes de côté (32a) du profilé de base (28a) se trouvent en vis-à-vis de la bande de plancher (40a) du profilé de couverture (38a).

7. Elément de liaison selon la revendication 6, caractérisé en ce que sur les bandes de côté (32a) du profilé de base (28a) dépassent des barrettes longitudinales (34a) approximativement dans le prolongement de la bande de plancher (30a).

8. Elément de liaison selon l'une ou l'autre des revendications 4 et 5, caractérisé en ce que la bande de plancher (30) du profilé de base (28) repose en position de montage de l'élément de liaison sur des barrettes profilées (50) dépassant par paires du plancher de wagon (26) et présentant une section transversale en forme de T.

9. Elément de liaison selon la revendication 8, caractérisé en ce que la bande de plancher (30) du profilé de base (28) présente un renfoncement (36) en forme de rainure s'étendant à son milieu longitudinal et pénétrant entre les barrettes profilées (50).

10. Elément de liaison selon la revendication 8, caractérisé en ce que pour la fixation par coopération de forces du profilé de base (28) sur le plancher de wagon (26), la bande de plancher (30) est recouverte à l'emplacement du renfoncement en forme de rainure (36) par une anse de serrage (56) montée en butée contre les barrettes profilées (50).

11. Elément de liaison selon l'une ou l'autre des revendications 6 ou 7, caractérisé en ce que la bande de plancher (30a) du profilé de base (28a) repose en position de montage de l'élément de liaison (B) directement sur le plancher de wagon (26).

12. Elément de liaison selon l'une quelconque des revendications 1 à 11, caractérisé en ce que le profilé de base (28, 28a, 28b, 28c) et le profilé de couverture (38, 38a, 38b, 38c) sont extrudés en aluminium.

13. Elément de liaison selon l'une quelconque des revendications 1 à 12, caractérisé en ce que les masses élastiques ou barrettes profilées élastiques (46, 46a, 46b) et la couche ou plaque mince (48) amortissant les bruits sont constituées en un caoutchouc naturel ou en des matériaux similaires.

14. Elément de liaison selon l'une quelconque des revendications 1 à 13, caractérisé en ce que les masses élastiques ou barrettes profilées élastiques (46, 46a, 46b) et la couche ou plaque mince (48) amortissant les bruits sont vulcanisées sur les parties profilées correspondantes.

15. Elément de liaison selon l'une ou l'autre des revendications 13 et 14, caractérisé en ce que les masses élastiques (46a, 46b) présentent différentes rigidités.
